# EUROPÄISCHE PATENTANMELDUNG

(11) **EP 1 518 664 A1**
(43) Veröffentlichungstag der Anmeldung: **30.03.2005**
(21) Anmeldenummer: 03021344.1
(22) Anmeldetag: 20.09.2003
(51) Int. Cl.: B29C 65/16, B23K 1/005

(54) **Verfahren und Vorrichtung zum Verbinden von Bauteilen durch Laserstrahlung**

(71) Anmelder: Leister Process Technologies, 6060 Sarnen (CH)
(72) Erfinder: Chen, Jie-Wei, 6055 Alpnach Dorf (CH); Leister, Christiane, 6063 Stalden (CH)
(74) Vertreter: Klocke, Peter, Dipl.-Ing.

(57) **Zusammenfassung**

Verfahren und Vorrichtung zum Verbinden von Bauteilen (7,8) insbesondere Kunststoffbauteilen, mittels Laserstrahlen (3) nach dem Durchstrahlschweißverfahren. Um die Laserstrahlen (3) simultan bei auch größeren Bauteilen (7,8) in den Bereich der Fügenaht (10) zu bringen, ist ein Spannelement (4) vorgesehen, das Einrichtungen (6) zum Lenken des Laserstrahls (3) die Fügenaht (10) enthält. Zusätzlich ist ein an die Form der Bauteile (7,8) angepasstes Spannteil (5), das für den Laserstrahl (3) transparent ist, vorgesehen, über das die Bauteile (7,8) zusammengepresst werden und der Laserstrahl (3) in den Bereich der Fügenaht (10) gebracht wird. Damit kann das Scannerverfahren vor allem beim Simultanschweißen unbeschränkt für alle möglichen Bauteile eingesetzt werden. Das Verfahren kann auch zum Löten von Anschlüssen bei elektronischen Bauteilen eingesetzt werden.

## Beschreibung

### Beschreibung

Verfahren zum Verbinden von Bauteilen, insbesondere Kunststoffbauteilen, oder auch zum Löten von Anschlüssen von elektronischen Bauteilen mittels Laserstrahlen, wobei ein Laserstrahl erzeugt und entsprechend der Verbindungskontur von einer Beleuchtungseinrichtung quasi simultan auf die zu verbindenden Stellen gelenkt wird. Die Erfindung betrifft außerdem eine Vorrichtung zum Verbinden von Bauteilen, insbesondere Kunststoffbauteilen, durch Laserstrahlen mittels einer Laserquelle und einer Beleuchtungseinrichtung zum Formen und gezielten Lenken des Laserstrahls quasi simultan auf die zu verbindenden Stellen sowie einer Zusammenpresseinrichtung für die Bauteile zumindest in dem zu verbindenden Bereich.

Das Verbinden von Kunststoffbauteilen mittels Laserstrahlen im IR-Bereich, insbesondere nach dem Durchstrahlschweißverfahren, ist allgemein bekannt. Dort werden die Bauteile derart miteinander verbunden, dass ein erstes, für die Laserstrahlung transparentes Teil, das der Laserquelle zugewandt ist, auf einem die Laserstrahlung absorbierenden Bauteil angeordnet wird. An der Kontaktfläche wird das für die Laserstrahlung absorbierende Bauteil erwärmt, so dass die beiden Bauteile dort, wo die Erwärmung eingetreten ist, aufschmelzen und unter gleichzeitiger Druckanwendung verbunden werden. Hierzu ist es auch bekannt, mittels eines Scanners einen punktförmigen Laserstrahl über bestimmte Bereiche der miteinander zu verbindenden Bauteile zu bewegen. Dies geschieht üblicherweise am einfachsten mit einem bewegten Scannerspiegel. Bei ausreichend schneller Bewegung kann hierzu ein nahezu simultanes Verbinden von Bauteilen in den gewünschten Bereichen realisiert werden. Auch ist es möglich, dem Laserstrahl eine entsprechende Schweißlinienkontur zu geben, so dass nicht eine punktweise Erwärmung, sondern eine Erwärmung entlang einer Linie oder einer Fläche durchgeführt wird und dieser Bereich gleichzeitig verschweißt wird. Dies ist besonders aus fertigungstechnischen Gründen im Hinblick auf die für die Schweißung erforderliche Zeit von Bedeutung. Vorteilhaft hier ist insbesondere auch, dass mit nur einer Laserquelle eine ausreichende Schweißung erzielt werden kann. Für die Laserstrahlformung und Lenkung wird in diesem Text zusammenfassend die Bezeichnung Beleuchtungseinrichtung verwendet. Diese enthält geeignete bekannte optische Systeme zur Strahlformung und Bewegung.

Problematisch ist dieses Verfahren dann, wenn großvolumige Teile oder komplizierte Teile miteinander verschweißt werden sollen, die beispielsweise extra für die Schweißung einen Flansch aufweisen, entlang dem die beiden Bauteile miteinander verschweißt werden sollen. Hier trifft der Laserstrahl bei einem derartigen Scannersystem nicht überall möglichst senkrecht auf die zu verbindenden Bauteile oder die zu verbindenden Stellen liegen im Strahlschatten, da der Laserstrahl stets aus einem Punkt abgelenkt wird.

Entsprechende Probleme treten auch beim Löten der Anschlüsse von größeren elektronischen Bauteilen auf, bei denen die Anschlüsse nicht direkt für den Laserstrahl zugänglich sind.

Der vorliegenden Erfindung liegt daher die Aufgabe zugrunde, eine Möglichkeit vorzuschlagen, mit der dieser Schatteneffekt aufgrund der Strahlwinkel kompensiert werden kann, um den Einsatzbereich des Scannerverfahrens zu erweitern.

Diese Aufgabe wird erfindungsgemäß durch ein Verfahren mit den Merkmalen des Anspruchs 1 sowie durch eine Vorrichtung mit den Merkmalen des selbständigen Vorrichtungsanspruchs gelöst. Weitere vorteilhafte Ausgestaltungen sind den jeweiligen rückbezogenen Unteransprüchen zu entnehmen.

Gemäß der Erfindung erfolgt dies dadurch, dass zwischen die Beleuchtungseinrichtung und die Bauteile eine zusätzliche Umlenkeinrichtung angeordnet wird und den von der Beleuchtungseinrichtung auf die Umlenkeinrichtung umgelenkten Laserstrahl zu Stellen an den Bauteilen gelenkt werden, die direkt von der Beleuchtungseinrichtung nicht erreicht werden können. Damit können Schatteneffekte vermieden und für die Erwärmung mit möglichst wenig Energie günstige Winkel erreicht werden. Die Umlenkung kann durch spiegelnde im wesentlichen stationäre Flächen oder auch speispielsweise durch sich bewegende Spiegel, mikrooptische Bauteile, mikrooptisch strukturierte Folien erfolgen. Diese können in einer Zusammenpresseinrichtung integriert oder auch außerhalb dieser angeordnet sein.

Hierzu werden gemäß einer bevorzugten Ausbildung der Laserstrahl über eine bauteilspezifisch ausgebildete Umlenkeinrichtung auf die zu verbindenden Stellen gelenkt. Diese wird entsprechend der Form der miteinander zu verbindenden Bauteile ausgebildet und angepasst, so dass möglichst immer, vorzugsweise simultan, alle Stellen für die Erwärmung ausreichend mit Energie versorgt werden.

Vorteilhafterweise wird der Laserstrahl insbesondere für das Verschweißen von Kunststoffen über eine in einer Zusammenpresseinrichtung integrierte Umlenkeinrichtung auf die zu verbindenden Stellen gelenkt. Dies können spiegelnde stationäre Flächen oder sich bewegende Spiegel sein. Vorzugsweise werden die Laserstrahlen über eine in einem der Laserquelle zugewandten ersten Spannelement der Zusammenpresseinrichtung angeordneten Umlenkeinrichtung auf die zu verbindenden Stellen gelenkt, wobei besonders bevorzugt die Laserstrahlen durch ein in dem Spannelement angeordnetes, für die Laserstrahlen transparentes Spannteil geleitet werden. Dieses Spannteil dient dann gleichzeitig dem Aufbringen des Anpressdruckes auf die miteinander zu verbindenden Bauteile, wobei das Spannteil bauteilspezifisch ausgebildet wird und einen dem Bauteil entsprechenden inneren Hohlraum aufweist, in dem das Bauteil Platz findet. Außerdem werden auch Angriffsflächen für die Aufbringung des Druckes zur Verfügung gestellt.

In der Spanneinrichtung sind die reflektierenden Flächen hinsichtlich Ihrer Neigung auf ihre Lage zu dem Bauteil abgestimmt, wobei die Neigung in einer Spanneineinrichtung variabel einstellbar sein kann. Vorzugsweise ist das erste Spannelement als Spannrahmen ausgebildet, der das für die Laserstrahlung transparente Spannteil gegen das eine, dem Laserstrahl zugewandte Bauteil drückt. In diesem Fall ist es zweckmäßig, die der Laserquelle zugewandte Seite mit einer Antireflektionsfläche zu beschichten, um möglichst alle auftreffende Laserstrahlung aufzunehmen. Es ist außerdem zweckmäßig, die seitliche Wandung des Spannelements mit einer reflektierenden Oberfläche zu versehen, so dass die, durch die der Beleuchtungseinrichtung zugewandte Seite eindringenden Laserstrahlen nicht seitlich austreten und an der Oberfläche direkt auf die zu verschweißenden Stellen reflektiert werden. Wird das Spannelement hinsichtlich seiner Außenkontur rund ausgebildet, so kann eine optimale Bestrahlung erfolgen. Je nach Ausbildung der Bauteile kann es auch andere, beispielsweise eckige Formen annehmen. Als Material für das Spannteil können sowohl Quarzglas als auch transparente Kunststoffe verwendet werden. Zumindest dieses Spannteil und gegebenenfalls auch der Spannrahmen sind exakt auf die Anforderung der Schweißung und das Bauteil abgestimmt und werden beispielsweise mittels eines CAD-System entsprechend geformt oder konstruiert. Für eine Massenproduktion ist dieser zusätzliche Aufwand wirtschaftlich zweckmäßig, da damit das Scannerverfahren, insbesondere für das Simultanschweißen unbeschränkt für alle möglichen Bauteile weiter eingesetzt werden kann.

Nachfolgend wird die Erfindung anhand eines Ausführungsbeispiels näher erläutert. Es stellen dar:
- Figur 1: eine Schnittdarstellung des Aufbaus in einer Zusammenpresseinrichtung und
- Figur 2: eine prinzipielle Darstellung mit anders angeordneten Reflexionsflächen.

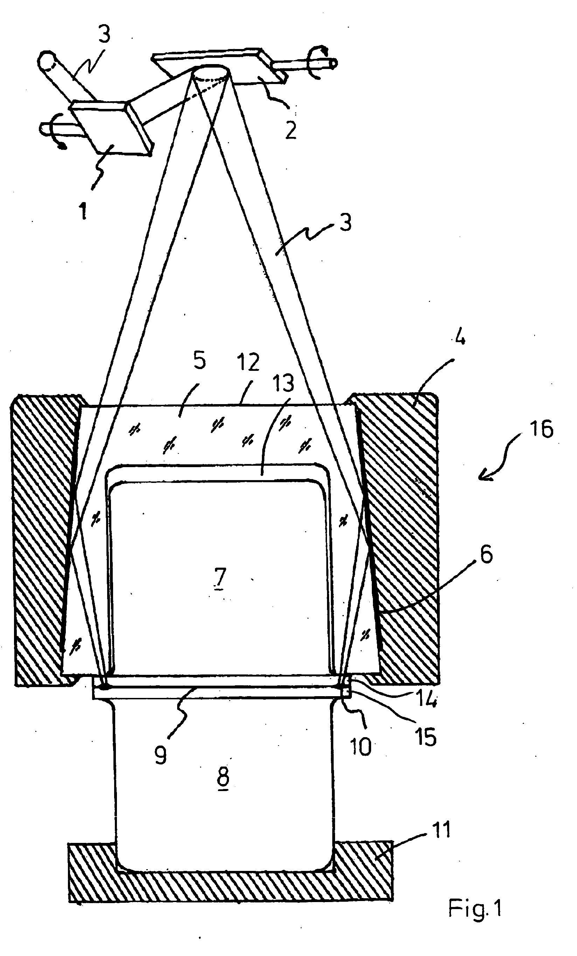

Gemäß Figur 1 wird über einen ersten um eine Achse drehbaren Scannerspiegel 1 und einen zweiten um eine Achse drehbaren Scannerspiegel 2 der in geeigneter Form auf diese Scannerspiegel 1, 2 auftreffende Laserstrahl 3 (insgesamt die Beleuchtungseinrichtung bildend), in diesem Beispiel in einer runden Form, in Richtung der miteinander zu verbindenden Bauteile 7 und 8 gelenkt. Die Bauteile 7 und 8 werden in einer Spanneinrichtung gehalten, die aus einem oberen Halteelement in Form eines des metallischen Spannrahmens 4 und einer unteren Halteplatte 11 besteht. Der metallische Spannrahmen 4 hält ein für die Laserstrahlung transparentes Spannteil 5, das entsprechend der Bauform des oberen Bauteils 7 ausgebildet ist. Hierzu weist es einen geeigneten Aufnahmehohlraum 13 auf, in dem das Bauteil 7 Platz findet und ist so ausgebildet, dass es sich an dem Flansch 14 abstützt. Entsprechend weist das untere Bauteil 8 in dem Ausführungsbeispiel einen zugeordneten Flansch 15 auf. Die Fügeebene 9 befindet sich zwischen diesem Flansch, so dass eine am Umfang umlaufende Fügenaht 10 über den Laserstrahl 3 angebracht werden kann. Hierzu gelangt der Laserstrahl 3 durch die mit einer Antireflektionsschicht 12 versehener Oberfläche des Spannteils 5 auf die außen auf dem Spannteil 5 angebrachte Verspiegelung 6, die möglichst verlustfrei den auftreffenden Laserstrahl zu der Fügenaht 10 reflektiert. Die mit der Verspiegelung 6 versehene Fläche in dem Spannteil 5 weist abhängig von den geometrischen Konstellationen eine geeignete Neigung auf. Damit gelangt der Laserstrahl 3 simultan in ausreichender Intensität an die zu verschweißende Stelle, so dass auch mit einer Beleuchtungseinrichtung eine schnelle Verschweißung realisiert werden kann.

In dem Ausführungsbeispiel ist zumindest das Spannteil 5 hinsichtlich seiner für die Laserstrahlen 3 wirksamen Bereiche rund ausgebildet.

Die Herstellung des Spannteils 5 kann beispielsweise durch ein CAD-System zusammen mit der Dimensionierung der Bauteile 7, 8, den Scannerparametern und der gewünschten einfallenden Strahlwinkel simuliert und definiert werden.

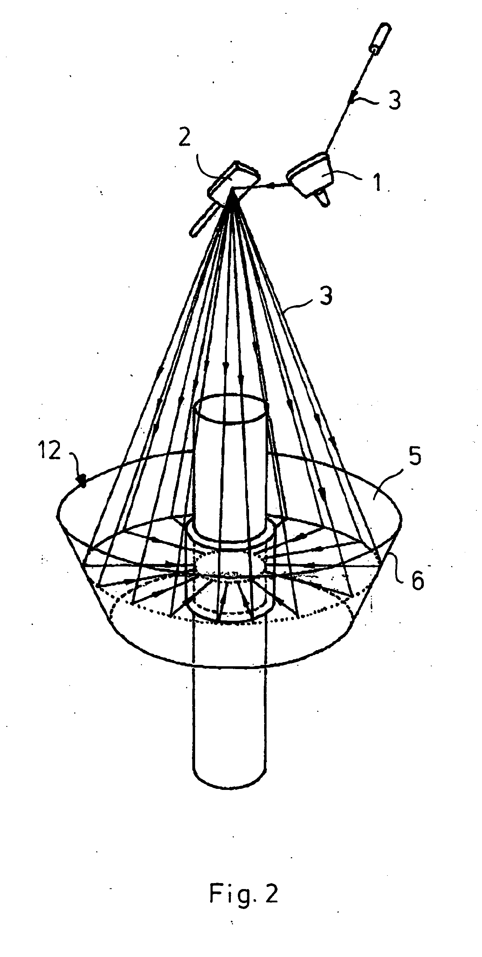

Figur 2 zeigt eine andere Neigung der reflektierenden Flächen, die in der Zusammenpresseinrichtung angeordnet sind, um beispielsweise einen Schlauch zu verschweisen.

## Patentansprüche

1. Verfahren zum Verbinden von Bauteilen, insbesondere Kunststoffbauteilen, mittels Laserstrahlen, wobei ein Laserstrahl erzeugt und entsprechend der Verbindungskontur von einer Beleuchtungseinrichtung (1,2) quasi simultan auf die zu verbindenden Stellen (10) gelenkt werden, **dadurch gekennzeichnet, dass** zwischen die Beleuchtungseinrichtung (1, 2) und die Bauteile (7, 8) eine zusätzliche Umlenkeinrichtung (6) angeordnet wird und die von der Beleuchtungseinrichtung (1, 2) auf die Umlenkeinrichtung (6) umgelenkten Laserstrahlen zu Stellen (10) an den Bauteilen (7, 8) gelenkt werden, die direkt von der Beleuchtungseinrichtung (1, 2) nicht erreicht werden können.

2. Verfahren nach Anspruch 1, **dadurch gekennzeichnet, dass** die Laserstrahlen über eine bauteilspezifisch ausgebildete Umlenkeinrichtung (6) auf die zu verbindenden Stellen gelenkt werden.

3. Verfahren nach Anspruch 1 oder 2, **dadurch gekennzeichnet, dass** die Laserstrahlen über eine in einer Zusammenpresseinrichtung (16) integrierte Umlenkeinrichtung (6) auf die zu verbindenden Stellen (10) gelenkt werden.

4. Verfahren nach Anspruch 3, **dadurch gekennzeichnet, dass** die Laserstrahlen über eine in einem der Laserquelle zugewandten ersten Umlenkeinrichtung (6) angeordneten Spannelement (4) der Zusammenpresseinrichtung (16) auf die zu verbindenden Stellen (10) gelenkt werden.

5. Verfahren nach Anspruch 4, **dadurch gekennzeichnet, dass** die Laserstrahlen (3) mittels festen oder beweglichen spiegelnden Flächen (6) in dem Spannelement (4) gelenkt werden.

6. Verfahren nach Anspruch 4 oder 5, **dadurch gekennzeichnet, dass** die Laserstrahlen (3) durch ein in dem Spannelement (4) angeordnetes für die Laserwellenlänge transparentes Spannteil (5) geleitet werden.

7. Verfahren nach Anspruch 6, **dadurch gekennzeichnet, dass** das Spannteil (5) entsprechend der Form der zu verschweißenden Bauteile (7, 8), insbesondere des der Laserquelle zugewandten Bauteils (7), angepasst wird.

8. Verfahren nach einem der vorangegangenen Ansprüche, **dadurch gekennzeichnet, dass** die Laserstrahlen (3) gleichzeitig auf alle zu verbindenden Stellen (10) gelenkt werden.

9. Vorrichtung zum Verbinden von Bauteilen (7, 8), insbesondere Kunststoffbauteilen, durch Laserstrahlen mittels einer Laserquelle und einer Beleuchtungseinrichtung (1, 2) zum Formen und gezielten Lenken des Laserstrahls (3) quasi simultan auf die zu verbindenden Stellen (10) sowie einer Zusammenpresseinrichtung (16) für die Bauteile (7, 8) zumindest in dem zu verbindenden Bereich, **dadurch gekennzeichnet, dass** in der Zusammenpresseinrichtung (16) Einrichtungen (6) zum Lenken des von der Beleuchtungseinrichtung (1, 2) kommenden Laserstrahls (3) auf die für den Laserstrahl (3) direkt von der Beleuchtungseinrichtung nicht zugänglichen zu verbinden Stellen (10) angeordnet sind.

10. Vorrichtung nach Anspruch 9, **dadurch gekennzeichnet, dass** die Einrichtungen (6) zum Lenken des Laserstrahls in einem der Laserquelle zugewandten ersten Spannelement (4) der Zusammenpresseinrichtung (16) angeordnet sind über das zusammen mit einem zweiten Spannelement (11) die dazwischen befindlichen Bauteile (7, 8) gegeneinander pressbar sind.

11. Vorrichtung nach Anspruch 10, **dadurch gekennzeichnet, dass** das erste Spannelement (4) spiegelnde Flächen (6) aufweist, deren Neigung auf die miteinander zu verbindenden Bauteile (7, 8) abgestimmt ist.

12. Vorrichtung nach Anspruch 11, **dadurch gekennzeichnet, dass** das erste Spannelement (4) als Spannrahmen ausgebildet ist, der ein für die Laserstrahlung transparentes Spannteil (5) gegen das eine Bauteil (7) drückt.

13. Vorrichtung nach Anspruch 12, **dadurch gekennzeichnet, dass** die der Laserquelle zugewandte Seite des Spannteils (5) mit einer Antireflektionsschicht (12) versehen ist.
